# EUROPEAN PATENT SPECIFICATION

(11) **EP 4 223 443 B1**
(45) Date of publication and mention of the grant of the patent: **04.12.2024**
(21) Application number: 23152745.8
(22) Date of filing: 20.01.2023
(51) Int. Cl.: B23K 1/00, B23K 1/002, B23K 1/19, B23K 31/02, F02C 7/22, F23R 3/28, B23K 101/00

(54) **METHOD OF JOINING CONNECTING FUEL INJECTION COMPONENTS TO A FUEL MANIFOLD**
VERFAHREN ZUM VERBINDEN VON KRAFTSTOFFEINSPRITZKOMPONENTEN MIT EINEM KRAFTSTOFFVERTEILER
PROCÉDÉ D'ASSEMBLAGE DE COMPOSANTS D'INJECTION DE CARBURANT À UN COLLECTEUR DE CARBURANT

(30) Priority: 21.01.2022 US 202217581358
(43) Date of publication of application: 09.08.2023
(73) Proprietor: Collins Engine Nozzles, Inc., West Des Moines, IA 50265 (US)
(72) Inventor: RYON, Jason, Carlisle, 50047 (US); ZINK, Gregory A., Des Moines, 50310 (US); WILLIAMS, Brandon Phillip, Johnston, IA 50131 (US); PROCIW, Lev A., Johnston, 50131 (US)
(74) Representative: Dehns

(56) References cited:
- JP-B2- 3 188 144
- US-A1- 2011 247 590
- US-A1- 2013 168 472
- US-A1- 2015 198 043

## Description

### BACKGROUND

### 1. Field

The present disclosure relates to joining methods, and more particularly to joining methods such as used in joining fuel injectors and the like to fuel manifolds such as in gas turbine engines.

### 2. Description of Related Art

Typically, fuel nozzles are connected to an external manifold on a gas turbine engine. These connections are often made using o-rings to seal the joints and threaded or flanged connections to make the mechanical connection. In the case of hot fuels, the temperatures may be too high for polymeric seal materials used in o-rings and would melt them.

The conventional techniques have been considered satisfactory for their intended purpose. However, there is an ever present need for improved systems and methods for joining injectors, nozzles, and the like to fuel manifolds. This disclosure provides a solution for this need.

US2013168472A1 (basis for the preamble of claim 1) relates to a joint for a fuel injector spoke. US2011247590A1 relates to support structures of injectors and atomizers for gas turbine engines. US2015198043A1 relates to a rotor for a turbine or a compressor, in particular for a supercharging device.

### SUMMARY

A method according to the present invention is defined in claim 1.

Further preferred embodiments of the present invention are defined in the dependent claims.

Joining the plurality of injection components can be performed one injection component at a time. Joining the plurality of injection components can be performed using only local heating to join each of the injection components in the plurality of injection components to the manifold without heating an entire assembly of the manifold and fuel injection components in an oven.

According to the present invention, fuel injection components are fuel injectors, each including a feed arm and nozzle tip extending from the feed arm, wherein the feed arm is where the fuel injector is joined to the manifold. The fuel manifold is outside of a high pressure case of a gas turbine engine. The nozzle tips are inside the high pressure case. The nozzle tips are in fluid communication with a combustion space within a combustor that is inside the high pressure case.

According to the present invention, joining includes welding or brazing. Joining can include, for each fuel injection component in the plurality of fuel injection components, locally heating a joint portion of the fuel manifold, a joint portion of the fuel injection component, and braze for forming the metallic joint between the joint portion of the fuel manifold and the joint portion of the fuel injection component. Locally heating can include using an induction heater. Using an induction heater can include seating a circumferentially segmented induction coil about one of the joint locations of the manifold and a corresponding joint location of one of the fuel injection components to locally heat the j oint locations and form a respective braze joint.

According to the present invention, the manifold is mounted to a gas turbine engine, and joining the plurality of injection components to the manifold is performed in situ on the gas turbine engine. The method can include for at least one of the injection components, cutting the injection component free from the manifold, and dressing the manifold for repair and/or replacement of the at least one injection component.

These and other features of the method of the present invention will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic cross-sectional side elevation view of a system, showing a manifold and an injector mounted in a gas turbine engine high pressure case and combustor liner;
Fig. 2 is a schematic cross-sectional side elevation view of the manifold and injector of Fig. 1, showing an induction coil for heating the braze joint;
Fig. 3 is a schematic cross-sectional side elevation view of the braze joint of Fig. 2, showing the braze ring;
Fig. 4 is a schematic perspective view of the system of Fig. 1, showing how the induction coil is segmented;
Fig. 5 is a schematic cross sectional perspective view of another system not covered by the present invention, showing a pressure atomizer nozzle mounted to a fuel manifold that can be located inside a high pressure engine case; and
Fig. 6 is a schematic cross-sectional perspective view of the system of Fig. 5, showing a plurality of pressure atomizer nozzles.

### DETAILED DESCRIPTION OF THE PREFERRED EMBODIMENTS

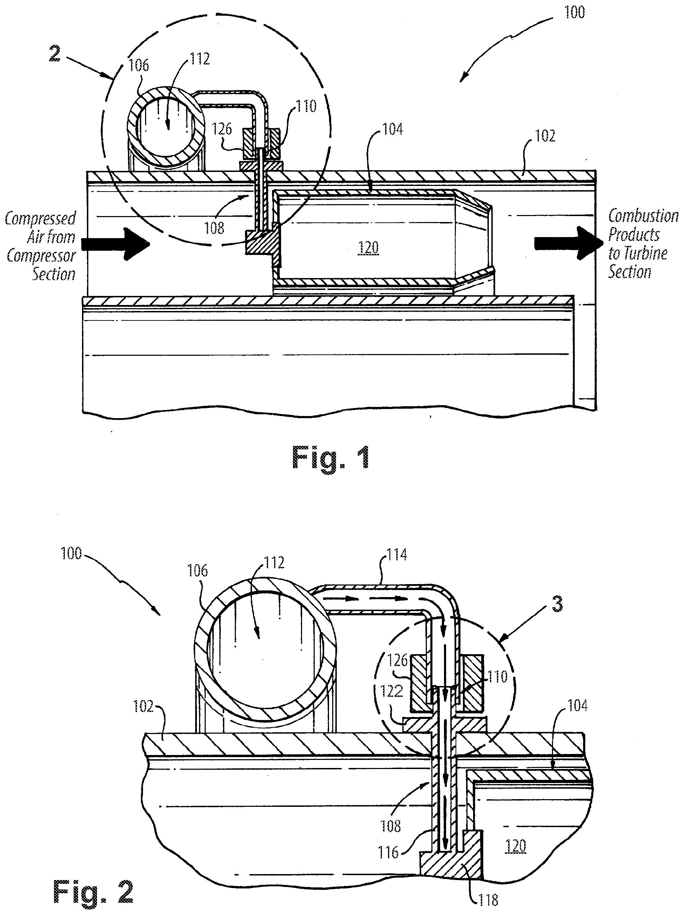

Reference will now be made to the drawings wherein like reference numerals identify similar structural features or aspects of the subject disclosure. For purposes of explanation and illustration, and not limitation, a partial view of an embodiment of a system is shown in Fig. 1 and is designated generally by reference character 100. Other embodiments of systems, or aspects thereof, are provided in Figs. 2-6, as will be described. The systems and methods described herein can be used to connect fuel nozzles and injectors to manifolds without the need for o-ring seals or the like, allowing for higher fuel temperatures than in more traditional systems.

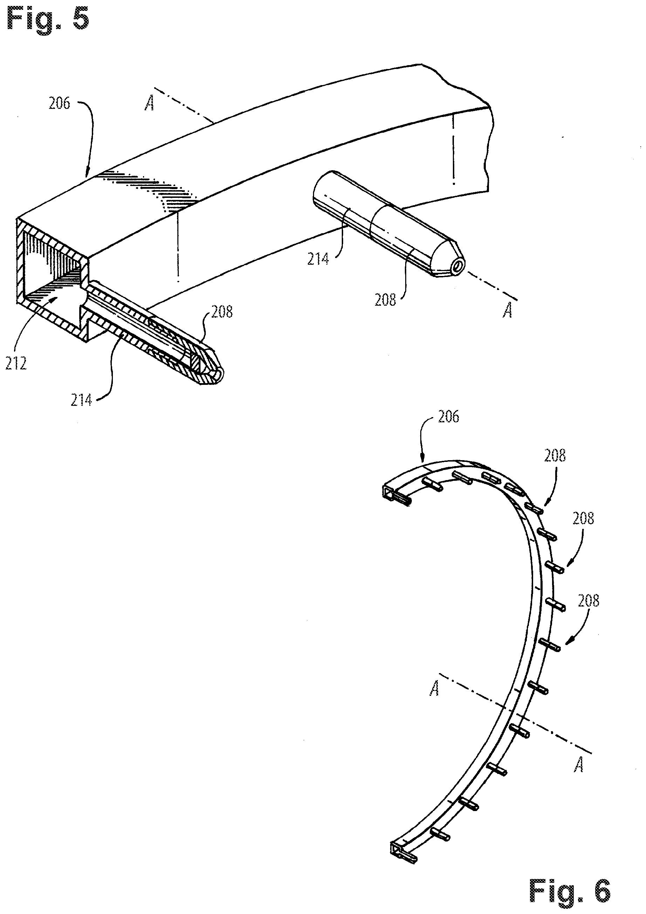

The system 100 includes a high pressure engine case 102 of a gas turbine engine including a compressor section (not pictured in Fig. 1, but indicated by the flow arrow for compressed air flowing in from the compressor section), a combustor 104 in fluid commination to receive the compressed air from the compressor section, and a turbine section (not pictured in Fig. 1, but indicated by the flow arrow for combustion products flowing from the combustor 104 to the turbine section). A fuel manifold 106 is included for supplying fuel for combustion with the compressed air in the combustor 104. A plurality of fuel injection components 108 are connected in fluid communication with the fuel manifold 106 with metallic joints 110 sealing between each of the plurality of fuel injection components 108 and the fuel manifold 106 to prevent leakage from between the manifold 106 and the plurality of fuel injection components 108. Those skilled in the art will readily appreciate that while only one fuel injection component 108 is shown in the cross-section of Fig. 1, the plurality of fuel injection components 108 are distributed circumferentially around the annular space defined by the cross-section in Fig. 1, see, e.g. Figs. 5-6 below with their circumferential distribution of fuel injection components 208.

With reference now to Fig. 2, the fuel manifold 106 defines a main fuel plenum 112. Each of the plurality of fuel injection components is connected in fluid communication with the main fuel plenum 112 along a respective fuel path that is devoid of o-ring seals or other polymeric seals, where the flow path passes from the plenum 112, through a respective manifold tube 114, and into the respective fuel injection component 108 as indicated in Fig. 2 by the flow arrows. The metallic joints 110 are braze joints and/or weld joints joining each manifold tube 114 to its respective fuel injection component 108.

The fuel injection components 108 are fuel injectors, each including a feed arm 116 and nozzle tip 118 extending from the feed arm 116. The feed arm 116 is where the fuel injector is joined to the manifold 106, i.e. an inlet end of each feed arm 116 is joined at the metallic joint 110 to a respective one of the manifold tubes 114. The fuel manifold 106 is outside of the high pressure case 102, but the nozzle tips 118 are inside the high pressure case 102. The nozzle tips 118 are in fluid communication with combustion space 120 within the combustor 104, which is inside the high pressure case 102. The nozzle tips 118 are configured to atomize fuel from the manifold 106 in a flow of compressor discharge air for combustion in the combustion space 120. A mounting flange 122 extends from the feed arm 116 of each fuel injector, for mounting the feed arm 116 to the high pressure engine case 102, and the feed arm 116 and its internal flow passage pass through the high pressure engine case 102 and through the mounting flange 122.

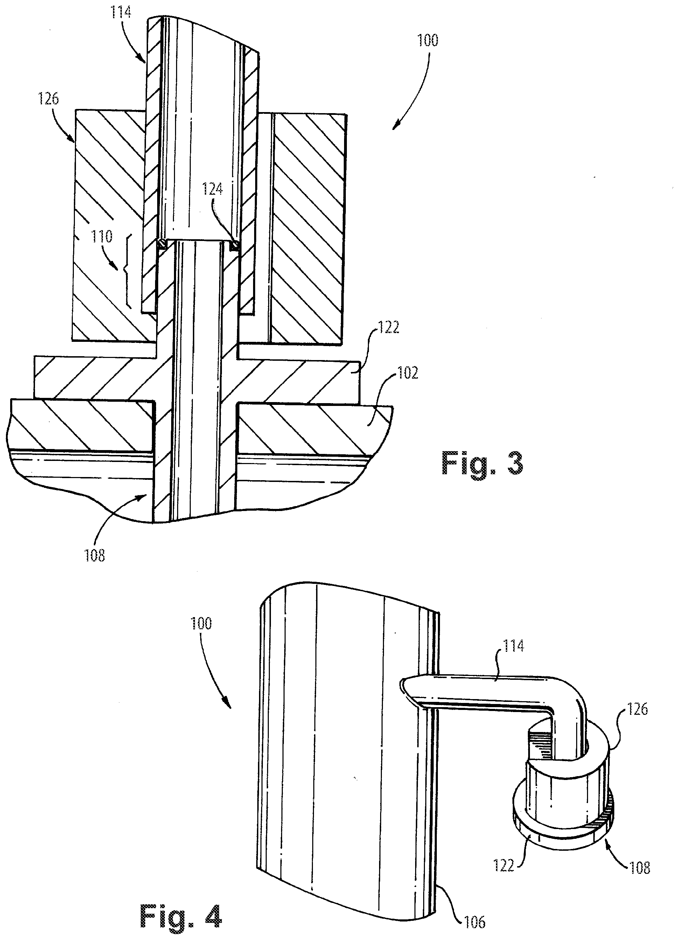

With continued reference to Fig. 3, a method includes joining a fuel plurality of injection components, e.g. fuel injection components 108, to a fuel manifold, e.g. fuel manifold 106, wherein for each fuel injection component in the plurality of fuel injection components, a metallic joint, e.g. metallic joint 110, is formed joining and sealing the fuel injection component to the manifold.

Joining the plurality of injection components is performed one injection component at a time, e.g., each feed arm 116 is joined to its respective manifold tube 114 on an individual basis for each joint 110, rather than heating the entire assembly of the manifold 102 and fuel injectors such as in a brazing oven. Joining the plurality of injection components is performed using only local heating to join each of the injection components to the manifold without having to heat the entire assembly of the manifold and fuel injection components, e.g. in an oven.

According to one configuration defined in claim 1, joining is performed by welding, e.g. welding around the joint 110 to seal the feed arm 108 to the manifold tube 114. According to another configuration defined in claim 1, joining includes brazing. This can include, locally heating a joint portion of the fuel manifold, e.g. an end portion of the manifold tube 114, and a joint portion of the fuel injection component, e.g. the end of the feed arm 116 that is outside the high pressure case 102, and braze, e.g. the braze ring 124 shown in Fig. 3, for forming the metallic joint 110 between the joint portion of the fuel manifold and the joint portion of the fuel injection component. The braze material of the braze ring 124 flows into the joint location of the metallic joint 110 during the brazing process, and when it later cools, the braze joins the manifold 106 to the fuel injection component 108. The local heating can be provided, for example, by using an induction heater 126 to locally heat the joint portions of the manifold tube 114 and fuel injection component 108, and/or the braze ring 124. The induction heater 126 can be circumferentially segmented, e.g. having the c-shaped cross-section shown in Fig. 4 to allow it to be seated around the joint locations of the manifold tubes 114 and feed arms 116 (not visible in Fig. 4 but see Fig. 2). Using the induction heater 126 can include includes seating a circumferentially segmented induction coil about one of the joint locations of the manifold and a corresponding joint location of one of the fuel injection components to locally heat the joint locations and form a respective braze joint. Both components being joined can be metallic, or one can be ceramic.

According to the present invention, the manifold is mounted to a gas turbine engine, joining the plurality of injection components to the manifold is performed in situ on the gas turbine engine, e.g. by moving the induction coil 126 from manifold tube 114 to manifold tube 114 joining a respective fuel injector to each. If it is ever needed to remove one of the fuel injectors, e.g. for repair or replacement, the injection component can be cut free from the manifold. The cut portion of the manifold can be dressed joining a repaired fuel injector or a replacement injector using techniques as disclosed herein.

With reference now to Figs. 5-6, not covered by the present invention, a fuel manifold 206 is shown having a fuel plenum 212 similar to manifold 106 above. However, in the case of manifold 206, the fuel injection components 208 are pressure atomizing nozzles, joined to the manifold 206 using techniques as described above. The respective manifold tubes 214 extend in an axial direction A from the fuel plenum 212 to each respective fuel injection component 208. This manifold configuration can allow for the manifold 206 and pressure atomizing nozzles 208 to be positioned inside the high pressure case 102 shown in Fig. 1, and in fluid communication with the combustion space 120, shown in Fig. 1, that is inside the high pressure case 102. It is also contemplated that the pressure atomizing nozzles 208 could instead be nozzle tips, or that the nozzle tips 108 of Fig. 1 could be replaced with pressure atomizing nozzles where the manifold 106 itself is outside of the high pressure case 102.

The method as described above and shown in the drawings, provide for connecting fuel nozzles and injectors to manifolds without the need for o-ring seals, allowing for higher fuel temperatures than in more traditional systems. While the method of the present invention has been shown and described with reference to preferred embodiments, those skilled in the art will readily appreciate that changes and/or modifications may be made thereto without departing from the scope of the present invention as defined in the appended claims.

## Claims

1. A method comprising:
joining a plurality of fuel injection components (108) to a fuel manifold (106), wherein
for each fuel injection component in the plurality of fuel injection components, a metallic joint (110) is formed joining and sealing the fuel injection component to the manifold by welding or brazing,
the method being **characterised in that**:
the fuel injection components (108) are fuel injectors, each including a feed arm (116) and nozzle tip (118) extending from the feed arm, wherein the feed arm is where the fuel injector is joined to the manifold, wherein the fuel manifold (108) is outside of a high pressure case (102) of a gas turbine engine, and wherein the nozzle tips (118) are inside the high pressure case, and wherein the nozzle tips are in fluid communication with a combustion space (120) within a combustor that is inside the high pressure case, wherein the manifold (106) is mounted to the gas turbine engine, and wherein joining the plurality of injection components (108) to the manifold is performed *in situ* on the gas turbine engine.

2. The method as recited in claim 1, wherein joining the plurality of injection components (108) is performed one injection component at a time.

3. The method as recited in claim 1 or 2, wherein joining the plurality of injection components (108) is performed using only local heating to join each of the injection components in the plurality of injection components to the manifold (106) without heating an entire assembly of the manifold and fuel injection components in an oven.

4. The method as recited in any preceding claim, wherein joining includes, for each fuel injection component (108) in the plurality of fuel injection components, locally heating a joint portion of the fuel manifold (106), a joint portion of the fuel injection component, and braze for forming the metallic joint (110) between the joint portion of the fuel manifold and the joint portion of the fuel injection component, optionally
wherein locally heating includes using an induction heater (126), and further optionally
wherein using an induction heater includes seating a circumferentially segmented induction coil about one of the joint locations of the manifold and a corresponding joint location of one of the fuel injection components to locally heat the joint locations and form a respective braze joint.

5. The method as recited in any preceding claim,
further comprising for at least one of the injection components (108), cutting the injection component (108) free from the manifold (106), and dressing the manifold (106) for repair and/or replacement of the at least one injection component (108).

## Patentansprüche

1. Verfahren, umfassend:
Verbinden einer Vielzahl von Kraftstoffeinspritzkomponenten (108) mit einem Kraftstoffverteiler (106), wobei für jede Kraftstoffeinspritzkomponente in der Vielzahl von Kraftstoffeinspritzkomponenten eine metallische Verbindung (110) gebildet wird, die die Kraftstoffeinspritzkomponente durch Schweißen oder Löten mit dem Verteiler verbindet und abdichtet, wobei das Verfahren **dadurch gekennzeichnet ist, dass**:
die Kraftstoffeinspritzkomponenten (108) Kraftstoffinjektoren sind, die jeweils einen Zuführarm (116) und eine Düsenspitze (118) umfassen, die sich von dem Zuführarm erstreckt, wobei sich der Zuführarm dort befindet, wo der Kraftstoffinjektor mit dem Verteiler verbunden ist, wobei sich der Kraftstoffverteiler (108) außerhalb eines Hochdruckgehäuses (102) eines Gasturbinentriebwerks befindet, und wobei sich die Düsenspitzen (118) innerhalb des Hochdruckgehäuses befinden, und wobei die Düsenspitzen in Fluidverbindung mit einem Verbrennungsraum (120) innerhalb einer Brennkammer stehen, die sich innerhalb des Hochdruckgehäuses befindet, wobei der Verteiler (106) an dem Gasturbinentriebwerk montiert ist, und wobei das Verbinden der Vielzahl von Einspritzkomponenten (108) mit dem Verteiler vor Ort an dem Gasturbinentriebwerk durchgeführt wird.

2. Verfahren nach Anspruch 1, wobei das Verbinden der Vielzahl von Einspritzkomponenten (108) für jede Einspritzkomponente einzeln durchgeführt wird.

3. Verfahren nach Anspruch 1 oder 2, wobei das Verbinden der Vielzahl von Einspritzkomponenten (108) unter Verwendung von lediglich lokaler Erhitzung durchgeführt wird, um jede der Einspritzkomponenten in der Vielzahl von Einspritzkomponenten mit dem Verteiler (106) zu verbinden, ohne eine gesamte Baugruppe aus Verteiler und Kraftstoffeinspritzkomponenten in einem Ofen zu erhitzen.

4. Verfahren nach einem der vorhergehenden Ansprüche, wobei das Verbinden für jede Kraftstoffeinspritzkomponente (108) in der Vielzahl von Kraftstoffeinspritzkomponenten lokales Erhitzen eines Verbindungsabschnitts des Kraftstoffverteilers (106), eines Verbindungsabschnitts der Kraftstoffeinspritzkomponente und Löten zum Bilden der metallischen Verbindung (110) zwischen dem Verbindungsabschnitt des Kraftstoffverteilers und dem Verbindungsabschnitt der Kraftstoffeinspritzkomponente beinhaltet, wobei optional
das lokale Erhitzen Verwenden eines Induktionsheizgeräts (126) beinhaltet, und wobei ferner optional
das Verwenden eines Induktionsheizgeräts Platzieren einer in Umfangsrichtung segmentierten Induktionsspule um eine der Verbindungsstellen des Verteilers und eine entsprechende Verbindungsstelle einer der Kraftstoffeinspritzkomponenten beinhaltet, um die Verbindungsstellen lokal zu erhitzen und eine jeweilige Lötverbindung zu bilden.

5. Verfahren nach einem der vorhergehenden Ansprüche, ferner umfassend für mindestens eine der Einspritzkomponenten (108) Abschneiden der Einspritzkomponente (108) von dem Verteiler (106) und Bearbeiten des Verteilers (106) zur Reparatur und/oder zum Austausch der mindestens einen Einspritzkomponente (108).

## Revendications

1. Procédé comprenant :
l'assemblage d'une pluralité de composants d'injection de carburant (108) à un collecteur de carburant (106), dans lequel pour chaque composant d'injection de carburant dans la pluralité de composants d'injection de carburant, un joint métallique (110) est formé pour joindre et sceller le composant d'injection de carburant au collecteur par soudage ou brasage,
le procédé étant **caractérisé en ce que** :
Les composants d'injection de carburant (108) sont des injecteurs de carburant, chacun comportant un bras d'alimentation (116) et une pointe de buse (118) se prolongeant à partir du bras d'alimentation, dans lequel le bras d'alimentation est l'endroit où l'injecteur de carburant est joint au collecteur, dans lequel le collecteur de carburant (108) est à l'extérieur d'un boîtier haute pression (102) d'un moteur à turbine à gaz, et dans lequel les pointes de buse (118) sont à l'intérieur du boîtier haute pression, et dans lequel les pointes de buse sont en communication fluidique avec un espace de combustion (120) à l'intérieur d'une chambre de combustion qui est à l'intérieur du boîtier haute pression, dans lequel le collecteur (106) est monté sur le moteur à turbine à gaz, et dans lequel l'assemblage de la pluralité de composants d'injection (108) au collecteur est réalisé *in situ* sur le moteur à turbine à gaz.

2. Procédé selon la revendication 1, dans lequel l'assemblage de la pluralité de composants d'injection (108) est réalisé un composant d'injection à la fois.

3. Procédé selon la revendication 1 ou 2, dans lequel l'assemblage de la pluralité de composants d'injection (108) est réalisé à l'aide uniquement d'un chauffage local pour assembler chacun des composants d'injection dans la pluralité de composants d'injection au collecteur (106) sans chauffer un ensemble entier du collecteur et des composants d'injection de carburant dans un four.

4. Procédé selon une quelconque revendication précédente, dans lequel l'assemblage comporte, pour chaque composant d'injection de carburant (108) dans la pluralité de composants d'injection de carburant, le chauffage local d'une partie de joint du collecteur de carburant (106), d'une partie de joint du composant d'injection de carburant et d'une brasure pour former le joint métallique (110) entre la partie de joint du collecteur de carburant et la partie de joint du composant d'injection de carburant, éventuellement
dans lequel le chauffage local comporte l'utilisation d'un appareil de chauffage à induction (126), et également éventuellement
dans lequel l'utilisation d'un appareil de chauffage à induction comporte l'installation d'une bobine d'induction segmentée circonférentiellement autour de l'un des emplacements de joint du collecteur et d'un emplacement de joint correspondant de l'un des composants d'injection de carburant pour chauffer localement les emplacements de joint et former un joint de brasure respectif.

5. Procédé selon une quelconque revendication précédente, comprenant également, pour au moins l'un des composants d'injection (108), la découpe du composant d'injection (108) pour le libérer du collecteur (106), et l'habillage du collecteur (106) pour la réparation et/ou le remplacement de l'au moins un composant d'injection (108).
